# EUROPEAN PATENT APPLICATION

(11) **EP 3 467 346 A1**
(43) Date of publication of application: **10.04.2019**
(21) Application number: 17801889.1
(22) Date of filing: 11.05.2017
(51) Int. Cl.: F16H 3/091, F16H 57/023, H02K 7/18

(54) **DRIVING SYSTEM OF DUAL-MOTOR DUAL-SHAFT INPUT GEARBOX AND GEAR SHIFT CONTROL METHOD THEREFOR**

(30) Priority: 24.05.2016 CN 201610350380
(71) Applicant: Nanjing Yueboo Power System Co., Ltd., Nanjing, Jiangsu 210019 (CN)
(72) Inventor: LI, Zhanjiang, Nanjing Jiangsu 210019 (CN); GAO, Chao, Nanjing Jiangsu 210019 (CN); ZHAO, Zhizhuan, Nanjing Jiangsu 210019 (CN); SI, Gongzuo, Nanjing Jiangsu 210019 (CN)
(74) Representative: D'Halleweyn, Nele Veerle Trees Gertrudis
(86) International application number: PCT/CN2017/000346
(87) International publication number: WO 2017/202031

(57) **Abstract**

Disclosed are a driving system of a dual-motor dual-shaft input gearbox and a gear shift control method therefor. The system comprises a driving motor I (1), a driving motor II (21) and an electrically controlled mechanical automatic transmission. The electrically controlled mechanical automatic transmission comprises a first gear set (4, 18, 12, 10), a second gear set (17, 6, 7, 15), a third gear set (4, 18, 14, 8), a fourth gear (17), a clutch collar I (16), a clutch collar II (9), a transmission input shaft I (3), a transmission input shaft II (19) and a transmission output shaft (11). The electrically controlled mechanical automatic transmission provides 3 gears for the power output from the driving motor I (1) and the driving motor II (21). By the coupling of the driving motor I (1), the driving motor II (21) and the electrically controlled mechanical automatic transmission and the driving of the driving motor I (1) and the driving motor II (21), the switching between the 3 gears can be achieved. The system saves the vehicle layout space, the gears do not affect each other, the requirements for bearings and gear speeds are not high, and the service life is prolonged.

## Description

### FIELD

The present disclosure relates to the technical field of electric vehicle transmission, and in particular to a driving system for a dual-input shaft gearbox used with two motors and a shift control method therefor.

### BACKGROUND

Environment protection and energy conservation are important issues faced by the whole world in the 21st century. The Chinese government has also proposed a basic national policy for building a conservation-oriented society and an industrial development policy that encourages the development of small-displacement energy-saving vehicles. The electric vehicle is one of the important means to achieve this goal.

Currently, a common pure electric driving system mainly include: a multi-stage transmission and a conventional driving system having a clutch, a multi-stage transmission and a driving system without a clutch, two independent driving motors and a fixed-gear transmission with a drive shaft, or a driving motor and a transmission with a primary speed reducer. The multi-stage transmission and the conventional driving system having a clutch exhibit better accelerating performance, but there is power interruption during gear shift. The multi-stage transmission and the driving system without a clutch have high transmission efficiency and no power interruption. The driving motor and the transmission with a primary speed reducer can realize continuously variable transmission, but have poor acceleration performance and a poor climbing ability, and the driving motor cannot operate at optimal efficiency.

On the other hand, a vehicle demands different powers during acceleration, low-speed travel and high-speed travel. If a single motor is used for driving, it is difficult to maintain the motor at a high efficiency, which easily causing waste of electric energy. In the conventional technology, a dual motor driving system is also adopted, but the dual motor driving system has an improper arrangement, a great weight, and a poor shifting quality. Especially, the high rotating speed has high requirements on the rotating speeds of bearings and gears and affects the service life of the dual motor driving system.

### SUMMARY

It is an object of the present disclosure is to provide a driving system for a dual-input shaft gearbox used with two motors, and a shift control method therefor. The driving system has proper arrangement, no interference among gear positions, low requirements on rotating speeds of bearings and gears, long service life and no power interruption.

The following solution is provided to solve the above problem. A driving system for a dual-input shaft gearbox used with two motors is provided, which includes: a driving motor I; a driving motor II; and an electronically-controlled automated mechanical transmission, including: a first gear set, a second gear set, a third gear set, a fourth gear set, an engagement sleeve I, an engagement sleeve II, a transmission input shaft I, a transmission input shaft II and a transmission output shaft. The first gear set includes a gear I, a gear VIII, a gear X and a gear V which are engaged with each other, the second gear set includes a gear II, a gear VI, a gear VII and a gear III which are engaged with each other, the third gear set includes a gear I, a gear VIII, a gear IX and a gear IV which are engaged with each other, and the fourth gear set includes a gear II. The gear I is fixedly connected to the transmission input shaft I, the gear II is fixedly connected to the transmission input shaft II, the gear III, the gear IV and the gear V arranged on the transmission output shaft in such a manner that the gear III, the gear IV and the gear V do not rotate as the transmission output shaft rotates, the gear VI and the gear VII are fixedly connected to a transmission intermediate shaft I, the gear VIII, the gear IX and the gear X are fixedly connected to a transmission intermediate shaft II, an output shaft of the driving motor I is connected to the transmission input shaft I, an output shaft of the driving motor II is connected to the transmission input shaft II, the engagement sleeve I surrounds and is secured to the transmission output shaft and is arranged adjacent to the gear II and the gear III, with the engagement sleeve I being engaged with or disengaged from the gear II and the gear III, and the engagement sleeve II surrounds and is secured to the transmission output shaft and is arranged adjacent to the gear IV and the gear V, with the engagement sleeve II being engaged with or disengaged from the gear IV and the gear V.

A shift control method for a driving system for a dual-input shaft gearbox used with two motors is provided, which includes: providing, by an electronically-controlled automated mechanical transmission, 3 gear positions for power output of a driving motor I and a driving motor II, and switching among the 3 gear positions when the driving motor I and the driving motor II are driven and battery power is sufficient, through engagement between the driving motor I and the driving motor II and the electronically-controlled automated mechanical transmission. The 3 gear positions include a dual-motor low-speed gear position, a dual-motor intermediate-speed gear position, and a dual-motor high-speed gear position.

Further, in a case that the driving system for a dual-input shaft gearbox used with two motors operates in the dual-motor low-speed gear position, the shift control method may include: engaging an engagement sleeve II with a gear V such that the gear V is fixedly connected to a transmission output shaft, and engaging an engagement sleeve I with a gear III such that the gear III is fixedly connected to the transmission output shaft. In this case, the driving motor I and the driving motor II rotate in a same direction and at different rotating speeds, power outputted from the driving motor I is transmitted through a power transmission route successively passing through a transmission input shaft I, a gear I, a gear VIII, a transmission intermediate shaft II, a gear X, the gear V, and the engagement sleeve II, and is outputted via the transmission output shaft, and power outputted from the driving motor II is transmitted in a power transmission route successively passing through a transmission input shaft II, a gear II, a gear VI, a transmission intermediate shaft I, a gear VII, the gear III, and the engagement sleeve I, and is outputted via the transmission output shaft.

Further, in a case that the driving system for a dual-input shaft gearbox used with two motors operates at the dual-motor intermediate-speed gear position, the shift control method may include: engaging an engagement sleeve II with a gear IV such that the gear IV is fixedly connected to a transmission output shaft, and engaging an engagement sleeve I with a gear III such that the gear III is fixedly connected to the transmission output shaft. In this case, the driving motor I and the driving motor II rotate in a same direction and at different rotating speeds, power outputted from the driving motor I is transmitted through a power transmission route successively passing through a transmission input shaft I, a gear I, a gear VIII, a transmission intermediate shaft II, a gear IX, the gear IV, and the engagement sleeve II, and is outputted via the transmission output shaft, and power outputted from the driving motor II is transmitted through a power transmission route successively passing through a transmission input shaft II, a gear II, a gear VI, a transmission intermediate shaft I, a gear VII, the gear III, and the engagement sleeve I, and is outputted via the transmission output shaft.

Further, in a case that the driving system for a dual-input shaft gearbox used with two motors operates at the dual-motor high-speed gear position, the shift control method may include: engaging an engagement sleeve II with a gear IV such that the gear IV is fixedly connected to a transmission output shaft, and engaging an engagement sleeve I with a gear II such that the gear II is fixedly connected to the transmission output shaft. In this case, the driving motor I and the driving motor II rotate in a same direction and at different rotating speeds, power outputted from the driving motor I is transmitted through a power transmission route successively passing through a transmission input shaft I, a gear I, a gear VIII, a transmission intermediate shaft II, a gear IX, the gear IV, and the engagement sleeve II, and is outputted via the transmission output shaft, and power outputted from the driving motor II is transmitted through a power transmission route successively passing through a transmission input shaft II, the gear II and the engagement sleeve I, and is outputted via the transmission output shaft.

Further, in a case that the driving system for a dual-input shaft gearbox used with two motors is shifted from the dual-motor low-speed gear position to the dual-motor high-speed gear position, the shift control method may include the following steps 1 to 6.

In step 1, the driving system is shifted from the dual-motor low-speed gear position to a gear position at which the driving motor I operates alone at a low speed. In this step, an engagement sleeve I is disengaged from a gear III, an engagement sleeve II is engaged with a gear V such that the gear V is fixedly connected to a transmission output shaft. In this case, power outputted from the driving motor I is transmitted through a power transmission route successively passing through a transmission input shaft I, a gear I, a gear VIII, a transmission intermediate shaft II, a gear X, the gear V, and the engagement sleeve II, and is outputted via the transmission output shaft.

In step 2, the driving system is shifted from the gear position at which the driving motor I operates alone at a low speed to a gear position at which the driving motor I and the driving motor II operate at low speeds. In this step, a rotating speed of the driving motor II is adjusted, and the engagement sleeve I is engaged with the gear III such that the gear III is fixedly connected to the transmission output shaft when the rotating speed of the driving motor II is the same as a rotating speed of the transmission output shaft. In this case, the driving motor I and the driving motor II rotate in a same direction and at different rotating speeds, power outputted from the driving motor I is transmitted through a power transmission route successively passing through the transmission input shaft I, the gear I, the gear VIII, the transmission intermediate shaft II, the gear X, the gear V, and the engagement sleeve II, and is outputted via the transmission output shaft, and power outputted from the driving motor II is transmitted through a power transmission route successively passing through a transmission input shaft II, a gear II, a gear VI, a transmission intermediate shaft I, a gear VII, the gear III, and the engagement sleeve I, and is outputted via the transmission output shaft.

In step 3, the driving system is shifted from the gear position at which the driving motor I and the driving motor II operate at low speeds to a gear position at which the driving motor II operates alone at a low speed. In this step, the engagement sleeve II is disengaged from the gear V. In this case, power outputted from the driving motor II is transmitted through a power transmission route successively passing through the transmission input shaft II, the gear II, the gear VI, the transmission intermediate shaft I, the gear VII, the gear III, and the engagement sleeve I, and is outputted via the transmission output shaft.

In step 4, the driving system is shifted from the gear position at which the driving motor II operates alone at a low speed to the dual-motor intermediate-speed gear position. In this step, a rotating speed of the driving motor I is adjusted, and the engagement sleeve II is engaged with a gear IV such that the gear IV is fixedly connected to the transmission output shaft when the rotating speed of the driving motor I is the same as the rotating speed of the transmission output shaft. In this case, power outputted from the driving motor I is transmitted through a power transmission route successively passing through the transmission input shaft I, the gear I, the gear VIII, the transmission intermediate shaft II, a gear IX, the gear IV, and the engagement sleeve II, and is outputted via the transmission output shaft, and power outputted from the driving motor II is transmitted through a power transmission route successively passing through the transmission input shaft II, the gear II, the gear VI, the transmission intermediate shaft I, the gear VII, the gear III, and the engagement sleeve I, and is outputted via the transmission output shaft.

In step 5, the driving system is shifted from the dual-motor intermediate-speed gear position to a gear position at which the driving motor I operates alone at a high speed. In this step, the engagement sleeve I is disengaged from the gear III. In this case, power outputted from the driving motor I is transmitted through a power transmission route successively passing through the transmission input shaft I, the gear VIII, the transmission intermediate shaft II, the gear IX, the gear IV, and the engagement sleeve II, and is outputted via the transmission output shaft.

In step 6, the driving system is shifted from the gear position at which the driving motor I operates alone at a high speed to the dual-motor high-speed gear position. In this step, the rotating speed of the driving motor II is adjusted, and the engagement sleeve I is engaged with the gear II such that the gear II is fixedly connected to the transmission output shaft when the rotating speed of the driving motor II is the same as the rotating speed of the transmission output shaft. In this case, the driving motor I and the driving motor II rotate in a same direction and at different rotating speeds, power outputted from the driving motor I is transmitted through a power transmission route successively passing through the transmission input shaft I, the gear I, the gear VIII, the transmission intermediate shaft II, the gear IX, the gear IV, and the engagement sleeve II, and is outputted via the transmission output shaft, and power outputted from the driving motor II is transmitted through a power transmission route successively passing through the transmission input shaft II, the gear II and the engagement sleeve I, and is outputted via the transmission output shaft.

Further, in a case that the driving system for a dual-input shaft gearbox used with two motors is shifted from the dual-motor high-speed gear position to the dual-motor low-speed gear position, the shift control method may include the following steps 1 to 4.

In step 1, the driving system is shifted from the dual-motor high-speed gear position to a gear position at which the driving motor I operates alone at a high speed. In this step, an engagement sleeve I is disengaged from a gear II. In this case, power outputted from the driving motor I is transmitted through a power transmission route successively passing through a transmission input shaft I, a gear VIII, a transmission intermediate shaft II, a gear IX, a gear IV, and an engagement sleeve II, and is outputted via a transmission output shaft.

In step 2, the driving system is shifted from the gear position at which the driving motor I operates alone at a high speed to the dual-motor intermediate-speed gear position. In this step, a rotating speed of the driving motor II is adjusted, and the engagement sleeve I is engaged with a gear III such that the gear III is fixedly connected to the transmission output shaft when the rotating speed of the driving motor II is the same as a rotating speed of the transmission output shaft. In this case, the driving motor I and the driving motor II rotate in a same direction and at different rotating speeds, power outputted from the driving motor I is transmitted through a power transmission route successively passing through the transmission input shaft I, a gear I, the gear VIII, the transmission intermediate shaft II, the gear IX, the gear IV, and the engagement sleeve II, and is outputted via the transmission output shaft, and power outputted from the driving motor II is transmitted through a power transmission route successively passing through a transmission input shaft II, the gear II, a gear VI, a transmission intermediate shaft I, a gear VII, the gear III, and the engagement sleeve I, and is outputted via the transmission output shaft.

In step 3, the driving system is shifted from the dual-motor intermediate-speed gear position to a gear position at which the driving motor II operates alone at a low speed. In this step, the engagement sleeve II is disengaged from the gear IV. In this case, power outputted from the driving motor II is transmitted through a power transmission route successively passing through the transmission input shaft II, the gear II, the gear VI, the transmission intermediate shaft I, the gear VII, the gear III, and the engagement sleeve I, and is outputted via the transmission output shaft.

In step 4, the driving system is shifted from the gear position at which the driving motor II operates alone at a low speed to a gear position at which the driving motor I and the driving motor II operate at low speeds. In this step, a rotating speed of the driving motor I is adjusted, and the engagement sleeve II is engaged with a gear V such that the gear V is fixedly connected to the transmission output shaft when the rotating speed of the driving motor I is the same as the rotating speed of the transmission output shaft. In this case, the driving motor I and the driving motor II rotate in the same direction and at different rotating speeds, power outputted from the driving motor I is transmitted through a power transmission route successively passing through the transmission input shaft I, the gear I, the gear VIII, the transmission intermediate shaft II, a gear X, the gear V, and the engagement sleeve II, and is outputted via the transmission output shaft, and power outputted from the driving motor II is transmitted through a power transmission route successively passing through the transmission input shaft II, the gear II, the gear VI, the transmission intermediate shaft I, the gear VII, the gear III, and the engagement sleeve I, and is outputted via the transmission output shaft.

Further, the shift control method may further include a reverse gear control method which includes: in a case that the driving system operates at a reverse gear position, the driving motor I operates alone and rotates reversely, engaging an engagement sleeve II with a gear V, such that the gear V is fixedly connected to a transmission output shaft. In this case, power outputted from the driving motor I is transmitted through a power transmission route successively passing through a transmission input shaft I, a gear I, a gear VIII, a transmission intermediate shaft II, a gear X, the gear V, and the engagement sleeve II, and is outputted via the transmission output shaft.

Further, when the driving system for a dual-input shaft gearbox used with two motors performs braking, the shift control method includes the following cases.

In a case that a vehicle travels at the dual-motor low-speed gear position, braking is performed when a brake pedal is depressed, a part of power inputted due to depression of the brake pedal is transmitted through a power transmission route successively passing through a transmission output shaft, an engagement sleeve II, a gear V, a gear X, a transmission intermediate shaft II, a gear VIII, a gear I, and a transmission input shaft I, and is inputted to the driving motor I to drive the driving motor I to generate power, and another part of the power inputted due to depression of the brake pedal is transmitted through a power transmission route successively passing through the transmission output shaft, an engagement sleeve I, a gear III, a gear VII, a transmission intermediate shaft I, a gear VI, a gear II, and a transmission input shaft II and is inputted into the driving motor II to drive the driving motor II to generate power. Mechanical braking is performed when a battery is fully charged.

In a case that the vehicle travels at the dual-motor intermediate gear position, braking is performed when the brake pedal is depressed, a part of power inputted due to depression of the brake pedal is transmitted through a power transmission route successively passing through the transmission output shaft, the engagement sleeve I, the gear III, the gear VII, the transmission intermediate shaft I, the gear VI, the gear II, and the transmission input shaft II, and is inputted into the driving motor II to drive the driving motor II to generate power, and another part of power inputted due to depression of the brake pedal is transmitted through a power transmission route successively passing through the transmission output shaft, the engagement sleeve II, a gear IV, a gear IX, the transmission intermediate shaft II, the gear VIII, the gear I, and the transmission input shaft I, and is inputted into the driving motor I to drive the driving motor I to generate power. Mechanical braking is performed when the battery is fully charged.

In a case that the vehicle travels at the dual-motor high-speed gear position, braking is performed when the brake pedal is depressed, a part of the power inputted due to depression of the brake pedal is transmitted through a power transmission route successively passing through the transmission output shaft, the engagement sleeve II, the gear IV, the gear IX, the transmission intermediate shaft II, the gear VIII, the gear I, and the transmission input shaft I, and is inputted into the driving motor I to drive the driving motor I to generate power, and another part of the power inputted due to depression of the brake pedal is transmitted through a power transmission route successively passing through the transmission output shaft, the engagement sleeve I, the gear II, and the transmission input shaft II, and is inputted into the driving motor II to drive the driving motor II to generate power. Mechanical braking is performed when the battery is fully charged.

The present disclosure has the following advantages.
1. The arrangement is space saving. The arrangement of the driving system of the dual-motor dual-shaft input gearbox in the vehicle is space saving, and has little impact on original arrangement of the vehicle. The weight of the entire system is greatly reduced, meeting the requirements of lightweight and greatly reducing the costs.
2. There is no interference among the gear positions. In the gearbox of the driving system for a dual-input shaft gearbox used with two motors, one input shaft controls the first and third gear positions, the other input shaft controls the second and fourth gear positions, and, there is no physical connection between the first and third gear positions and the second and fourth gear position, such that the gear positions do not interfere with each other, and there is no need to coordinate the two motors when a shift is performed.
3. The requirement on rotating speed is low. With the driving system, the problem associated with the high rotating speed can be avoided. Therefore, the driving system imposes low requirements on rotating speeds of bearings and gears, and has a long service life.

### BRIEF DESCRIPTION OF THE DRAWINGS

Figure 1 is a schematic structural diagram of a driving system for a dual-input shaft gearbox used with two motors according to the present disclosure;
Figure 2 is a schematic diagram showing a power transmission route in a case that the driving system for a dual-input shaft gearbox used with two motors shown in Figure 1 operates at a dual-motor low-speed gear position;
Figure 3 is a schematic diagram showing a power transmission route in a case that the driving system for a dual-input shaft gearbox used with two motors shown in Figure 1 operates at a dual-motor intermediate-speed gear position;
Figure 4 is a schematic diagram showing a power transmission route in a case that the driving system for a dual-input shaft gearbox used with two motors shown in Figure 1 operates at a dual-motor high-speed gear position;
Figure 5a is a schematic diagram showing a power transmission route in a case that the driving system for a dual-input shaft gearbox used with two motors shown in Figure 1 operates at a gear position at which the driving motor I operates alone at a low speed;
Figure 5b is a schematic diagram showing a power transmission route in a case that in the driving system for a dual-input shaft gearbox used with two motors shown in Figure 1 operates at a gear position at which the driving motor II operates alone at a low speed;
Figure 5c is a schematic diagram showing a power transmission route in a case that the driving system for a dual-input shaft gearbox used with two motors shown in Figure 1 operates at a gear position at which the driving motor I operates alone at a high speed;
Figure 6 is a schematic diagram showing a power transmission route in a case that the driving system for a dual-input shaft gearbox used with two motors shown in Figure 1 operates at a reverse gear position;
Figure 7 is a schematic diagram showing a power transmission route in a case that the driving system for a dual-input shaft gearbox used with two motors shown in Figure 1 performs braking when operating at a dual-motor low-speed gear position;
Figure 8 is a schematic diagram showing a power transmission route in a case that the driving system for a dual-input shaft gearbox used with two motors shown in Figure 1 performs braking when operating at a dual-motor intermediate-speed gear position; and
Figure 9 is a schematic diagram showing a power transmission route in a case that the driving system for a dual-input shaft gearbox used with two motors shown in Figure 1 performs braking when operating at a dual-motor high-speed gear position.

### Reference numerals are listed as follows:

1 driving motor I, 2 output shaft of the driving motor I, 3 transmission input shaft I, 4 gear I, 5 transmission intermediate shaft I, 6 gear VI, 7 gear VII, 8 gear IV, 9 engagement sleeve II, 10 gear V, 11 transmission output shaft, 12 gear X, 13 transmission intermediate shaft II, 14 gear IX, 15 gear III, 16 engagement sleeve I, 17 gear II, 18 gear VIII, 19 transmission input shaft II, 20 output shaft of the driving motor II, 21 driving motor II.

### DETAILED DESCRIPTION OF THE EMBODIMENTS

The present disclosure is further described hereinafter in conjunction with the drawings and specific embodiments.

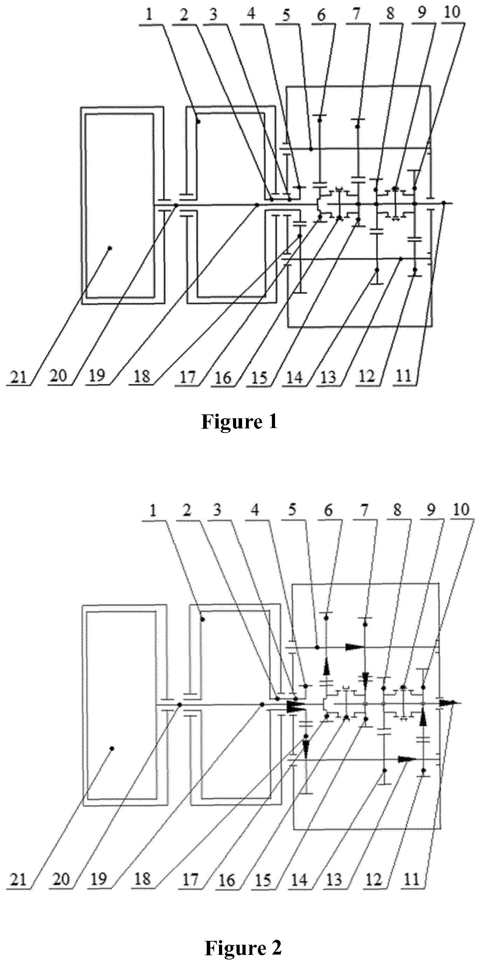

As shown in Figure 1, a driving system for a dual-input shaft gearbox used with two motors is provided. The driving system includes: a driving motor I 1, a driving motor II 21; and an electronically-controlled automated mechanical transmission, which includes: a first gear set, a second gear set, a third gear set, a fourth gear set, an engagement sleeve I 16, an engagement sleeve II 9, a transmission input shaft I 3, a transmission input shaft II 19 and a transmission output shaft 11. The first gear set includes a gear I 4, a gear VIII 18, a gear X 12 and a gear V 10 which are engaged with each other. The second gear set includes a gear II 17, a gear VI 6, a gear VII 7 and a gear III 15 which are engaged with each other, the third gear set includes a gear I 4, a gear VIII 18, a gear IX 14 and a gear IV 8 which are engaged with each other. The fourth gear set includes a gear II 17. The gear I 4 is fixedly connected to the transmission input shaft I 3. The gear II 17 is fixedly connected to the transmission input shaft II 19. The gear III 15, the gear IV 8 and the gear V 10 are arranged on the transmission output shaft 11 in such a manner that the gear III 15, the gear IV 8 and the gear V 10 do not rotate as the transmission output shaft 11 rotates. The gear VI 6 and the gear VII 7 are fixedly connected to a transmission intermediate shaft I 5. The gear VIII 18, the gear IX 14 and the gear X 12 are fixedly connected to a transmission intermediate shaft II 13. An output shaft 2 of the driving motor I is connected to the transmission input shaft I 3. An output shaft 20 of the driving motor II is connected to the transmission input shaft II 19. The engagement sleeve I 16 surrounds and is secured to the transmission output shaft 11 and is arranged adjacent to the gear II 17 and the gear III 15, with the engagement sleeve I 16 being engaged with or disengaged from the gear II 17 and the gear III 15. The engagement sleeve II 9 surrounds and is secured to the transmission output shaft 11 and is arranged adjacent to the gear IV 8 and the gear V 10, with the engagement sleeve II 9 being engaged with or disengaged from the gear IV 8 and the gear V 10.

A shift control method for a driving system for a dual-input shaft gearbox used with two motors is provided. The shift control method includes: providing, by the electronically-controlled automated mechanical transmission, 3 gear positions for power output of the driving motor I 1 and the driving motor II 21, and switching among the 3 gear positions when the driving motor I1 and the driving motor II 21 are driven and battery power is sufficient, through engagement between the driving motor I 1 and the driving motor II 21 and the electronically-controlled automated mechanical transmission. The 3 gear positions include a dual-motor low-speed gear position, a dual-motor intermediate-speed gear position, and a dual-motor high-speed gear position.

As shown in Figure 2, in a case that the driving system for a dual-input shaft gearbox used with two motors operates in the dual-motor low-speed gear position, the shift control method includes: engaging the engagement sleeve II 9 with the gear V 10 such that the gear V 10 is fixedly connected to the transmission output shaft 11, and engaging the engagement sleeve I 16 with a gear III 15 such that the gear III 15 is fixedly connected to the transmission output shaft 11. In this case, the driving motor I 1 and the driving motor II 21 rotate in a same direction and at different rotating speeds, and power outputted from the driving motor I 1 is transmitted through a power transmission route successively passing through the transmission input shaft I 3, the gear I 4, the gear VIII 18, the transmission intermediate shaft II 13, the gear X 12, the gear V 10, and the engagement sleeve II 9, and is outputted via the transmission output shaft 11, and power outputted from the driving motor II 21 is transmitted in a power transmission route successively passing through the transmission input shaft II 19, the gear II 17, the gear VI 6, the transmission intermediate shaft I 5, the gear VII 7, the gear III 15, and the engagement sleeve I 16, and is outputted via the transmission output shaft 11.

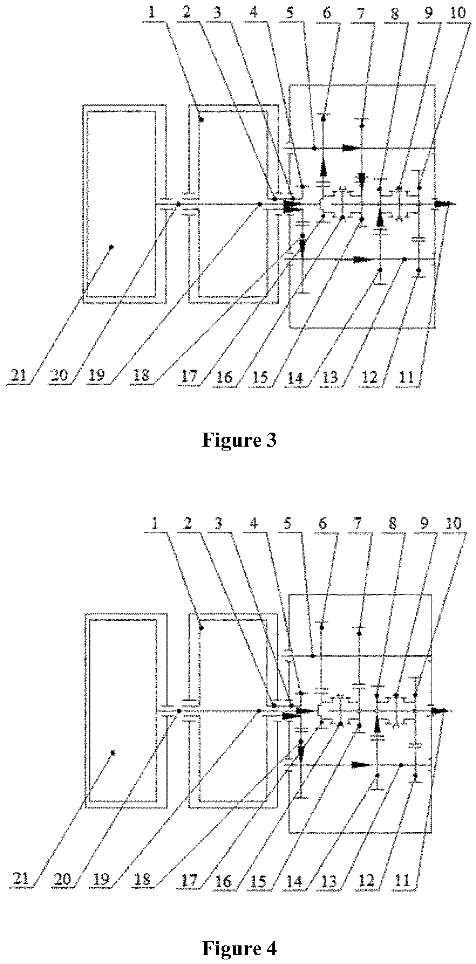

As shown in Figure 3, in a case that the driving system for a dual-input shaft gearbox used with two motors operates at the dual-motor intermediate-speed gear position, the shift control method includes: engaging the engagement sleeve II 9 with the gear IV 8 such that the gear IV 8 is fixedly connected to a transmission output shaft 11, and engaging the engagement sleeve I 16 with the gear III 15 such that the gear III 15 is fixedly connected to the transmission output shaft 11. In this case, the driving motor I 1 and the driving motor II 21 rotate in a same direction and at different rotating speeds, power outputted from the driving motor I 1 is transmitted through a power transmission route successively passing through the transmission input shaft I 3, the gear I 4, the gear VIII 18, the transmission intermediate shaft II 13, the gear IX 14, the gear IV 8, and the engagement sleeve II 9, and is outputted via the transmission output shaft 11, and power outputted from the driving motor II 21 is transmitted through a power transmission route successively passing through the transmission input shaft II 19, the gear II 17, the gear VI 6, the transmission intermediate shaft I 5, the gear VII 7, the gear III 15, and the engagement sleeve 116, and is outputted via the transmission output shaft 11.

As shown in Figure 4, in a case that the driving system for a dual-input shaft gearbox used with two motors operates at the dual-motor high-speed gear position, the shift control method includes: engaging the engagement sleeve II 9 with the gear IV 8 such that the gear IV 8 is fixedly connected to the transmission output shaft 11, and engaging the engagement sleeve I 16 with the gear II 17 such that the gear II 17 is fixedly connected to the transmission output shaft 11. In this case, the driving motor I 1 and the driving motor II 21 rotate in a same direction and at different rotating speeds, power outputted from the driving motor I 1 is transmitted through a power transmission route successively passing through the transmission input shaft I 3, the gear I 4, the gear VIII 18, the transmission intermediate shaft II 13, the gear IX 14, the gear IV 8, and the engagement sleeve II 9, and is outputted via the transmission output shaft 11, and power outputted from the driving motor II 21 is transmitted through a power transmission route successively passing through the transmission input shaft II 19, the gear II 17 and the engagement sleeve I 16, and is outputted via the transmission output shaft 11.

In a case that the driving system for a dual-input shaft gearbox used with two motors is shifted from the dual-motor low-speed gear position to the dual-motor high-speed gear position, the shift control method includes the following steps 1 to 6.

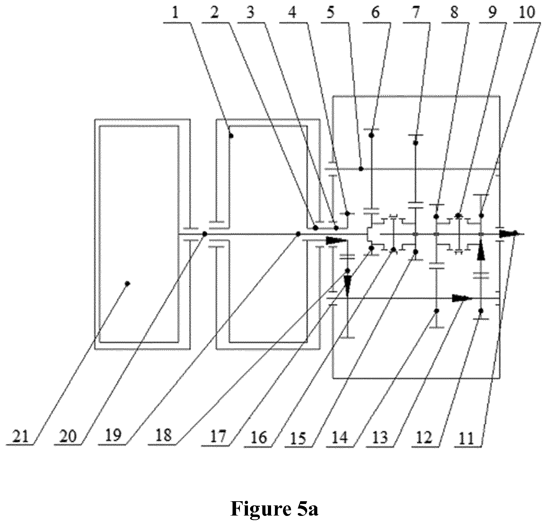

In step 1, as shown in Figure 5a, the driving system is shifted from the dual-motor low-speed gear position to a gear position at which the driving motor I 1 operates alone at a low speed. In this step, the engagement sleeve I 16 is disengaged from the gear III 15, the engagement sleeve II 9 is engaged with the gear V 10 such that the gear V 10 is fixedly connected to the transmission output shaft 11. In this case, power outputted from the driving motor I 1 is transmitted through a power transmission route successively passing through the transmission input shaft I 3, the gear I 4, the gear VIII 18, the transmission intermediate shaft II 13, the gear X 12, the gear V 10, and the engagement sleeve II 9, and is outputted via the transmission output shaft 11.

In step 2, as shown in Figure 2, the driving system is shifted from the gear position at which the driving motor I 1 operates alone at a low speed to a gear position at which the driving motor I 1 and the driving motor II 21 operate at low speeds. In this step, a rotating speed of the driving motor II 21 is adjusted, and the engagement sleeve 116 is engaged with the gear III 15 such that the gear III 15 is fixedly connected to the transmission output shaft 11 when the rotating speed of the driving motor II 21 is the same as a rotating speed of the transmission output shaft 11. In this case, the driving motor I 1 and the driving motor II 21 rotate in a same direction and at different rotating speeds, power outputted from the driving motor I 1 is transmitted through a power transmission route successively passing through the transmission input shaft I 3, the gear I 4, the gear VIII 18, the transmission intermediate shaft II 13, the gear X 12, the gear V 10, and the engagement sleeve II 9, and is outputted via the transmission output shaft 11, and power outputted from the driving motor II 21 is transmitted through a power transmission route successively passing through the transmission input shaft II 19, the gear II 17, the gear VI 6, the transmission intermediate shaft I 5, the gear VII 7, the gear III 15, and the engagement sleeve I 16, and is outputted via the transmission output shaft 11.

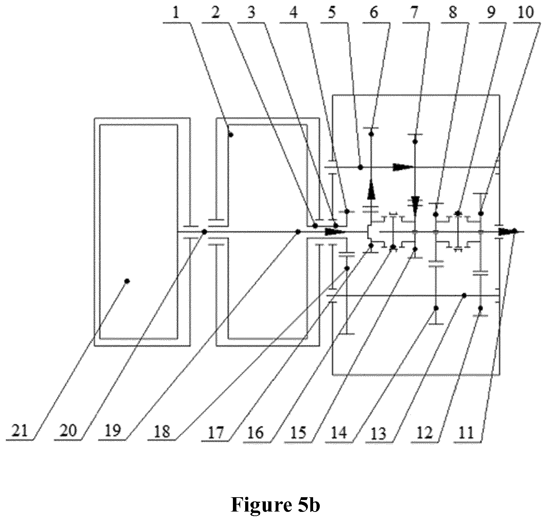

In step 3, as shown in Figure 5b, the driving system is shifted from the gear position at which the driving motor I 1 and the driving motor II 21 operate at low speeds to a gear position at which the driving motor II 21 operates alone at a low speed. In this step, the engagement sleeve II 9 is disengaged from the gear V 10. In this case, power outputted from the driving motor II 21 is transmitted through a power transmission route successively passing through the transmission input shaft II 19, the gear II 17, the gear VI 6, the transmission intermediate shaft I 5, the gear VII 7, the gear III 15, and the engagement sleeve I 16, and is outputted via the transmission output shaft 11.

In step 4, the driving system is shifted from the gear position at which the driving motor II 21 operates alone at a low speed to the dual-motor intermediate-speed gear position. In this step, a rotating speed of the driving motor I 1 is adjusted, and the engagement sleeve II 9 is engaged with a gear IV 8 such that the gear IV 8 is fixedly connected to the transmission output shaft 11 when the rotating speed of the driving motor I 1 is the same as the rotating speed of the transmission output shaft 11. In this case, power outputted from the driving motor I 1 is transmitted through a power transmission route successively passing through the transmission input shaft I 3, the gear I 4, the gear VIII 18, the transmission intermediate shaft II 13, the gear IX 14, the gear IV 8, and the engagement sleeve II 9, and is outputted via the transmission output shaft 11, and power outputted from the driving motor II 21 is transmitted through a power transmission route successively passing through the transmission input shaft II 19, the gear II 17, the gear VI 6, the transmission intermediate shaft I 5, the gear VII 7, the gear III 15, and the engagement sleeve 116, and is outputted via the transmission output shaft 11.

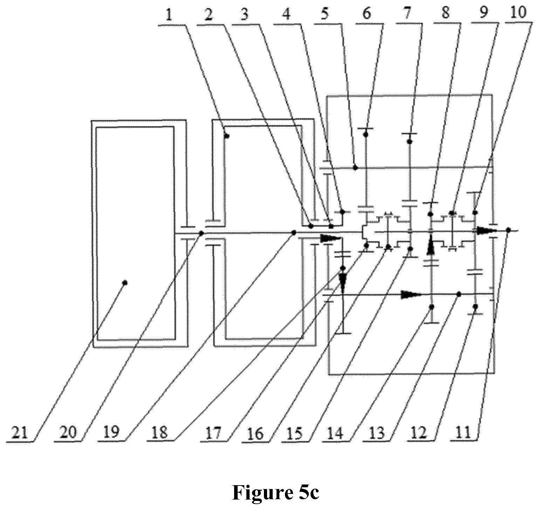

In step 5, as show in Figure 5c, the driving system is shifted from the dual-motor intermediate-speed gear position to a gear position at which the driving motor I 1 operates alone at a high speed. In this step, the engagement sleeve I 16 is disengaged from the gear III 15. In this case, power outputted from the driving motor I 1 is transmitted through a power transmission route successively passing through the transmission input shaft I 3, the gear VIII 18, the transmission intermediate shaft II 13, the gear IX 14, the gear IV 8, and the engagement sleeve II 9, and is outputted via the transmission output shaft 11.

In step 6, as shown in Figure 4, the driving system is shifted from the gear position at which the driving motor I 1 operates alone at a high speed to the dual-motor high-speed gear position. In this step, the rotating speed of the driving motor II 21 is adjusted, and the engagement sleeve I 16 is engaged with the gear II 17 such that the gear II 17 is fixedly connected to the transmission output shaft 11 when the rotating speed of the driving motor II 21 is the same as the rotating speed of the transmission output shaft 11. In this case, the driving motor I 1 and the driving motor II 21 rotate in a same direction and at different rotating speeds, power outputted from the driving motor I 1 is transmitted through a power transmission route successively passing through the transmission input shaft I 3, the gear I 4, the gear VIII 18, the transmission intermediate shaft II 13, the gear IX 14, the gear IV 8, and the engagement sleeve II 9, and is outputted via the transmission output shaft 11, and power outputted from the driving motor II 21 is transmitted through a power transmission route successively passing through the transmission input shaft II 19, the gear II 17 and the engagement sleeve I 16, and is outputted via the transmission output shaft 11.

In a case that the driving system for a dual-input shaft gearbox used with two motors is shifted from the dual-motor high-speed gear position to the dual-motor low-speed gear position, the shift control method includes the following steps 1 to 4.

In step 1, as shown in Figure 5c, the driving system is shifted from the dual-motor high-speed gear position to a gear position at which the driving motor I 1 operates alone at a high speed. In this step, the engagement sleeve I 16 is disengaged from the gear II 17. In this case, power outputted from the driving motor I 1 is transmitted through a power transmission route successively passing through the transmission input shaft I 3, the gear VIII 18, the transmission intermediate shaft II 13, the gear IX 14, the gear IV 8, and the engagement sleeve II 9, and is outputted via the transmission output shaft 11.

In step 2, as shown in Figure 3, the driving system is shifted from the gear position at which the driving motor I 1 operates alone at a high speed to the dual-motor intermediate-speed gear position. In this step, a rotating speed of the driving motor II 21 is adjusted, and the engagement sleeve I 16 is engaged with the gear III 15 such that the gear III 15 is fixedly connected to the transmission output shaft 11 when the rotating speed of the driving motor II 21 is the same as a rotating speed of the transmission output shaft 11. In this case, the driving motor I 1 and the driving motor II 21 rotate in a same direction and at different rotating speeds, power outputted from the driving motor I 1 is transmitted through a power transmission route successively passing through the transmission input shaft I 3, the gear I 4, the gear VIII 18, the transmission intermediate shaft II 13, the gear IX 14, the gear IV 8, and the engagement sleeve II 9, and is outputted via the transmission output shaft 11, and power outputted from the driving motor II 21 is transmitted through a power transmission route successively passing through the transmission input shaft II 19, the gear II 17, the gear VI 6, the transmission intermediate shaft I 5, the gear VII 7, the gear III 15, and the engagement sleeve I 16, and is outputted via the transmission output shaft 11.

In step 3, as shown in Figure 5b, the driving system is shifted from the dual-motor intermediate-speed gear position to a gear position at which the driving motor II 21 operates alone at a low speed. In this step, the engagement sleeve II 9 is disengaged from the gear IV 8. In this case, power outputted from the driving motor II 21 is transmitted through a power transmission route successively passing through the transmission input shaft II 19, the gear II 17, the gear VI 6, the transmission intermediate shaft I 5, the gear VII 7, the gear III 15, and the engagement sleeve I 16, and is outputted via the transmission output shaft 11.

In step 4, as shown in Figure 2, the driving system is shifted from the gear position at which the driving motor II 21 operates alone at a low speed to a gear position at which the driving motor I 1 and the driving motor II 21 operate at low speeds. In this step, a rotating speed of the driving motor I 1 is adjusted, the engagement sleeve II 9 is engaged with the gear V 10 such that the gear V 10 is fixedly connected to the transmission output shaft 11 when the rotating speed of the driving motor I 1 is the same as the rotating speed of the transmission output shaft 11. In this case, the driving motor I 1 and the driving motor II 21 rotate in the same direction and at different rotating speeds, power outputted from the driving motor I 1 is transmitted through a power transmission route successively passing through the transmission input shaft I 3, the gear I 4, the gear VIII 18, the transmission intermediate shaft II 13, the gear X 12, the gear V 10, and the engagement sleeve II 9, and is outputted via the transmission output shaft 11, and power outputted from the driving motor II 21 is transmitted through a power transmission route successively passing through the transmission input shaft II 19, the gear II 17, the gear VI 6, the transmission intermediate shaft I 5, the gear VII 7, the gear III 15, and the engagement sleeve I 16, and is outputted via the transmission output shaft 11.

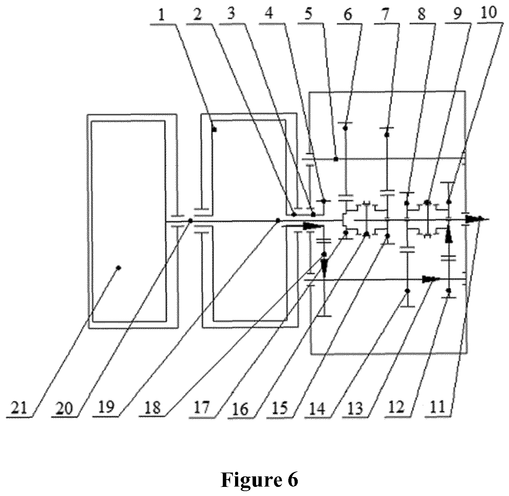

The gear shift control method further includes a reverse gear control method which includes:
as shown in Figure 6, in a case that the driving system operates at a reverse gear position, the driving motor I 1 operates alone and rotates reversely, engaging the engagement sleeve II 9 with the gear V 10, such that the gear V 10 is fixedly connected to the transmission output shaft 11. In this case, power outputted from the driving motor I 1 is transmitted through a power transmission route successively passing through the transmission input shaft I 3, the gear I 4, the gear VIII 18, the transmission intermediate shaft II 13, the gear X 12, the gear V 10, and the engagement sleeve II 9, and is outputted via the transmission output shaft 11.

When the driving system for a dual-input shaft gearbox used with two motors performs braking, the shift control method includes the following cases.

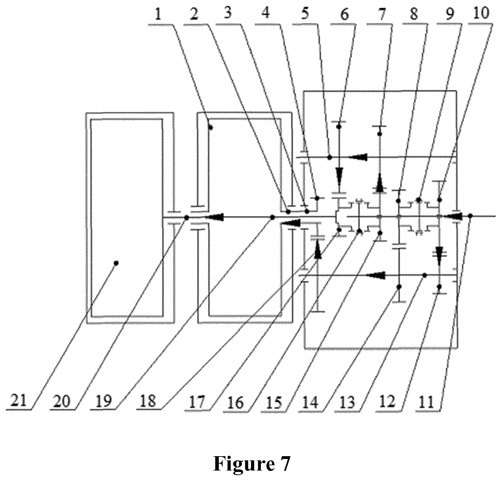

As shown in Figure 7, in a case that a vehicle travels at the dual-motor low-speed gear position, and braking is performed when a brake pedal is depressed, a part of power inputted due to depression of the brake pedal is transmitted through a power transmission route successively passing through the transmission output shaft 11, the engagement sleeve II 9, the gear V 10, the gear X 12, the transmission intermediate shaft II 13, the gear VIII 18, the gear I 4, and the transmission input shaft I 3, and is inputted to the driving motor I 1 to drive the driving motor I 1 to generate power, and another part of the power inputted due to depression of the brake pedal is transmitted through a power transmission route successively passing through the transmission output shaft 11, the engagement sleeve I 16, the gear III 15, the gear VII 7, the transmission intermediate shaft I 5, the gear VI 6, the gear II 17, and the transmission input shaft II 19 and is inputted into the driving motor II 21 to drive the driving motor II 21 to generate power. Mechanical braking is performed when a battery is fully charged.

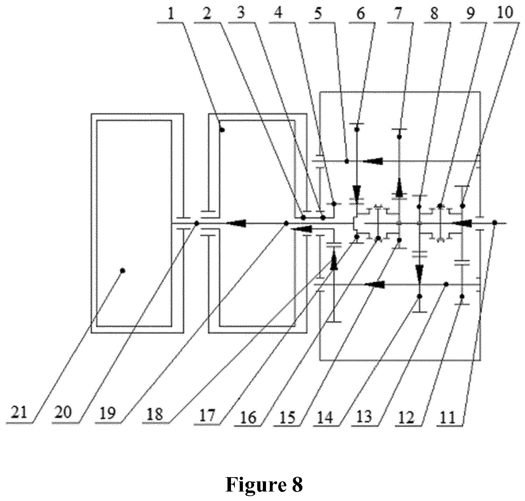

As shown in Figure 8, in a case that the vehicle travels at the dual-motor intermediate gear position, braking is performed when the brake pedal is depressed, a part of power inputted due to depression of the brake pedal is transmitted through a power transmission route successively passing through the transmission output shaft 11, the engagement sleeve I 16, the gear III 15, the gear VII 7, the transmission intermediate shaft I 5, the gear VI 6, the gear II 17, and the transmission input shaft II 19, and is inputted into the driving motor II 21 to drive the driving motor II 21 to generate power, and another part of power inputted due to depression of the brake pedal is transmitted through a power transmission route successively passing through the transmission output shaft 11, the engagement sleeve II 9, the gear IV 8, the gear IX 14, the transmission intermediate shaft II 13, the gear VIII 18, the gear I 4, and the transmission input shaft I 3, and is inputted into the driving motor I 1 to drive the driving motor I 1 to generate power. Mechanical braking is performed when the battery is fully charged.

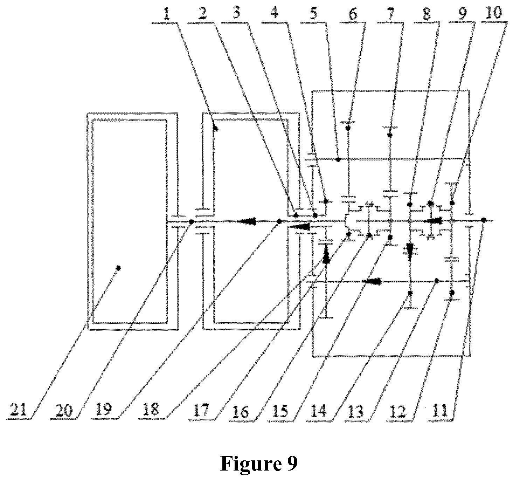

As shown in Figure 9, in a case that the vehicle travels at the dual-motor high-speed gear position, and braking is performed when the brake pedal is depressed, a part of the power inputted due to depression of the brake pedal is transmitted through a power transmission route successively passing through the transmission output shaft 11, the engagement sleeve II 9, the gear IV 8, the gear IX 14, the transmission intermediate shaft II 13, the gear VIII 18, the gear I 4, and the transmission input shaft I 3, and is inputted into the driving motor I 1 to drive the driving motor I 1 to generate power, and another part of the power inputted due to depression of the brake pedal is transmitted through a power transmission route successively passing through the transmission output shaft 11, the engagement sleeve I 16, the gear II 17, and the transmission input shaft II 19, and is inputted into the driving motor II 21 to drive the driving motor II 21 to generate power. Mechanical braking is performed when the battery is fully charged.

The gear positions of the electronically-controlled automated mechanical transmission are optimized in the speed ratio, which improves the operating efficiency of the motor, and the vehicle is more powerful and economical than a single-gear electric vehicle. Since the vehicle requires a relatively low power when traveling in an urban area, the system of the present disclosure can meet the requirements of the vehicle traveling on an urban road surface, including the starting, accelerating and climbing of the vehicle. Besides, the driving motor I (1) and the driving motor II (21) cooperate with each other to shift among gear positions, thereby realizing no power interruption during the shifting process, improving the shifting quality and the travel comfort of the vehicle. The forward and reverse rotation of the driving motor I (1) is realized by changing the direction of the input voltage, and in a case that the driving motor I (1) rotates reversely, reverse travel of the vehicle is realized.

It can be seen from the system of the present disclosure that, the present disclosure realizes the dynamic coupling of the two driving motors through the structure of the electronically-controlled automated mechanical transmission with high transmission efficiency, and provides multiple gear positions for the power output of the driving motors, which meets actual working requirements of the driving motors. In addition, through the shift among multiple operating modes, the speed characteristics and high-efficiency operating region of the driving motor can be effectively utilized. The driving system for a dual-input shaft gearbox used with two motors of the present disclosure has the advantages of simple structure and low costs, and can realize active synchronous speed regulation and no power-interruption control during shifting, thereby improving the power and economy of the vehicle.

The present disclosure is not limited to the above embodiments, and any modifications, improvements, and alterations without departing from the spirit of the present disclosure, which can be conceived by those skilled in the art, fall in the protection scope of the present disclosure.

## Claims

1. A driving system for a dual-input shaft gearbox used with two motors, comprising:
a driving motor I;
a driving motor II; and
an electronically-controlled automated mechanical transmission, comprising: a first gear set, a second gear set, a third gear set, a fourth gear set, an engagement sleeve I, an engagement sleeve II, a transmission input shaft I, a transmission input shaft II and a transmission output shaft, wherein
the first gear set comprises a gear I, a gear VIII, a gear X and a gear V which are engaged with each other, the second gear set comprises a gear II, a gear VI, a gear VII and a gear III which are engaged with each other, the third gear set comprises a gear I, a gear VIII, a gear IX and a gear IV which are engaged with each other, and the fourth gear set comprises a gear II,
the gear I is fixedly connected to the transmission input shaft I,
the gear II is fixedly connected to the transmission input shaft II,
the gear III, the gear IV and the gear V are arranged on the transmission output shaft in such a manner that the gear III, the gear IV and the gear V do not rotate as the transmission output shaft rotates,
the gear VI and the gear VII are fixedly connected to a transmission intermediate shaft I,
the gear VIII, the gear IX and the gear X are fixedly connected to a transmission intermediate shaft II,
an output shaft of the driving motor I is connected to the transmission input shaft I,
an output shaft of the driving motor II is connected to the transmission input shaft II,
the engagement sleeve I surrounds and is secured to the transmission output shaft and is arranged adjacent to the gear II and the gear III, with the engagement sleeve I being engaged with or disengaged from the gear II and the gear III, and
the engagement sleeve II surrounds and is secured to the transmission output shaft and is arranged adjacent to the gear IV and the gear V, with the engagement sleeve II being engaged with or disengaged from the gear IV and the gear V.

2. A shift control method for a driving system for a dual-input shaft gearbox used with two motors, comprising
providing, by an electronically-controlled automated mechanical transmission, 3 gear positions for power output of a driving motor I and a driving motor II, and
switching among the 3 gear positions when the driving motor I and the driving motor II are driven and battery power is sufficient, through engagement between the driving motor I and the driving motor II and the electronically-controlled automated mechanical transmission, wherein
the 3 gear positions comprise a dual-motor low-speed gear position, a dual-motor intermediate-speed gear position, and a dual-motor high-speed gear position.

3. The shift control method for a driving system for a dual-input shaft gearbox used with two motors according to claim 2, wherein in a case that the driving system for a dual-input shaft gearbox used with two motors operates in the dual-motor low-speed gear position, the shift control method comprises:
engaging an engagement sleeve II with a gear V such that the gear V is fixedly connected to a transmission output shaft, and
engaging an engagement sleeve I with a gear III such that the gear III is fixedly connected to the transmission output shaft, wherein
the driving motor I and the driving motor II rotate in a same direction and at different rotating speeds,
power outputted from the driving motor I is transmitted through a power transmission route successively passing through a transmission input shaft I, a gear I, a gear VIII, a transmission intermediate shaft II, a gear X, the gear V, and the engagement sleeve II, and is outputted via the transmission output shaft, and
power outputted from the driving motor II is transmitted in a power transmission route successively passing through a transmission input shaft II, a gear II, a gear VI, a transmission intermediate shaft I, a gear VII, the gear III, and the engagement sleeve I, and is outputted via the transmission output shaft.

4. The shift control method for a driving system for a dual-input shaft gearbox used with two motors according to claim 2, wherein in a case that the driving system for a dual-input shaft gearbox used with two motors operates at the dual-motor intermediate-speed gear position, the shift control method comprises:
engaging an engagement sleeve II with a gear IV such that the gear IV is fixedly connected to a transmission output shaft, and
engaging an engagement sleeve I with a gear III such that the gear III is fixedly connected to the transmission output shaft, wherein
the driving motor I and the driving motor II rotate in a same direction and at different rotating speeds,
power outputted from the driving motor I is transmitted through a power transmission route successively passing through a transmission input shaft I, a gear I, a gear VIII, a transmission intermediate shaft II, a gear IX, the gear IV, and the engagement sleeve II, and is outputted via the transmission output shaft, and
power outputted from the driving motor II is transmitted through a power transmission route successively passing through a transmission input shaft II, a gear II, a gear VI, a transmission intermediate shaft I, a gear VII, the gear III, and the engagement sleeve I, and is outputted via the transmission output shaft.

5. The shift control method for a driving system for a dual-input shaft gearbox used with two motors according to claim 2, wherein in a case that the driving system for a dual-input shaft gearbox used with two motors operates at the dual-motor high-speed gear position, the shift control method comprises:
engaging an engagement sleeve II with a gear IV such that the gear IV is fixedly connected to a transmission output shaft, and
engaging an engagement sleeve I with a gear II such that the gear II is fixedly connected to the transmission output shaft, wherein
the driving motor I and the driving motor II rotate in a same direction and at different rotating speeds,
power outputted from the driving motor I is transmitted through a power transmission route successively passing through a transmission input shaft I, a gear I, a gear VIII, a transmission intermediate shaft II, a gear IX, the gear IV, and the engagement sleeve II, and is outputted via the transmission output shaft, and
power outputted from the driving motor II is transmitted through a power transmission route successively passing through a transmission input shaft II, the gear II and the engagement sleeve I, and is outputted via the transmission output shaft.

6. The shift control method for a driving system for a dual-input shaft gearbox used with two motors according to claim 2, wherein in a case that the driving system for a dual-input shaft gearbox used with two motors is shifted from the dual-motor low-speed gear position to the dual-motor high-speed gear position, the shift control method comprises:
step 1: shifting the driving system from the dual-motor low-speed gear position to a gear position at which the driving motor I operates alone at a low speed, comprising: disengaging an engagement sleeve I from a gear III, engaging an engagement sleeve II with a gear V such that the gear V is fixedly connected to a transmission output shaft, wherein power outputted from the driving motor I is transmitted through a power transmission route successively passing through a transmission input shaft I, a gear I, a gear VIII, a transmission intermediate shaft II, a gear X, the gear V, and the engagement sleeve II, and is outputted via the transmission output shaft,
step 2: shifting the driving system from the gear position at which the driving motor I operates alone at a low speed to a gear position at which the driving motor I and the driving motor II operate at low speeds, comprising: adjusting a rotating speed of the driving motor II, and engaging the engagement sleeve I with the gear III such that the gear III is fixedly connected to the transmission output shaft when the rotating speed of the driving motor II is the same as a rotating speed of the transmission output shaft, wherein the driving motor I and the driving motor II rotate in a same direction and at different rotating speeds, power outputted from the driving motor I is transmitted through a power transmission route successively passing through the transmission input shaft I, the gear I, the gear VIII, the transmission intermediate shaft II, the gear X, the gear V, and the engagement sleeve II, and is outputted via the transmission output shaft, and power outputted from the driving motor II is transmitted through a power transmission route successively passing through a transmission input shaft II, a gear II, a gear VI, a transmission intermediate shaft I, a gear VII, the gear III, and the engagement sleeve I, and is outputted via the transmission output shaft,
step 3: shifting the driving system from the gear position at which the driving motor I and the driving motor II operate at low speeds to a gear position at which the driving motor II operates alone at a low speed, comprising: disengaging the engagement sleeve II from the gear V, wherein power outputted from the driving motor II is transmitted through a power transmission route successively passing through the transmission input shaft II, the gear II, the gear VI, the transmission intermediate shaft I, the gear VII, the gear III, and the engagement sleeve I, and is outputted via the transmission output shaft,
step 4: shifting the driving system from the gear position at which the driving motor II operates alone at a low speed to the dual-motor intermediate-speed gear position, comprising: adjusting a rotating speed of the driving motor I, and engaging the engagement sleeve II with a gear IV such that the gear IV is fixedly connected to the transmission output shaft when the rotating speed of the driving motor I is the same as the rotating speed of the transmission output shaft, wherein power outputted from the driving motor I is transmitted through a power transmission route successively passing through the transmission input shaft I, the gear I, the gear VIII, the transmission intermediate shaft II, a gear IX, the gear IV, and the engagement sleeve II, and is outputted via the transmission output shaft, and power outputted from the driving motor II is transmitted through a power transmission route successively passing through the transmission input shaft II, the gear II, the gear VI, the transmission intermediate shaft I, the gear VII, the gear III, and the engagement sleeve I, and is outputted via the transmission output shaft,
step 5: shifting the driving system from the dual-motor intermediate-speed gear position to a gear position at which the driving motor I operates alone at a high speed, comprising: disengaging the engagement sleeve I from the gear III, wherein power outputted from the driving motor I is transmitted through a power transmission route successively passing through the transmission input shaft I, the gear VIII, the transmission intermediate shaft II, the gear IX, the gear IV, and the engagement sleeve II, and is outputted via the transmission output shaft, and
step 6: shifting the driving system from the gear position at which the driving motor I operates alone at a high speed to the dual-motor high-speed gear position, comprising: adjusting the rotating speed of the driving motor II, and engaging the engagement sleeve I with the gear II such that the gear II is fixedly connected to the transmission output shaft when the rotating speed of the driving motor II is the same as the rotating speed of the transmission output shaft, wherein the driving motor I and the driving motor II rotate in a same direction and at different rotating speeds, power outputted from the driving motor I is transmitted through a power transmission route successively passing through the transmission input shaft I, the gear I, the gear VIII, the transmission intermediate shaft II, the gear IX, the gear IV, and the engagement sleeve II, and is outputted via the transmission output shaft, and power outputted from the driving motor II is transmitted through a power transmission route successively passing through the transmission input shaft II, the gear II and the engagement sleeve I, and is outputted via the transmission output shaft.

7. The shift control method for a driving system for a dual-input shaft gearbox used with two motors according to claim 2, wherein in a case that the driving system for a dual-input shaft gearbox used with two motors is shifted from the dual-motor high-speed gear position to the dual-motor low-speed gear position, the shift control method comprises:
step 1: shifting the driving system from the dual-motor high-speed gear position to a gear position at which the driving motor I operates alone at a high speed, comprising: disengaging an engagement sleeve I from a gear II, wherein power outputted from the driving motor I is transmitted through a power transmission route successively passing through a transmission input shaft I, a gear VIII, a transmission intermediate shaft II, a gear IX, a gear IV, and an engagement sleeve II, and is outputted via a transmission output shaft,
step 2: shifting the driving system from the gear position at which the driving motor I operates alone at a high speed to the dual-motor intermediate-speed gear position, comprising: adjusting a rotating speed of the driving motor II, and engaging the engagement sleeve I with a gear III such that the gear III is fixedly connected to the transmission output shaft when the rotating speed of the driving motor II is the same as a rotating speed of the transmission output shaft, wherein the driving motor I and the driving motor II rotate in a same direction and at different rotating speeds, power outputted from the driving motor I is transmitted through a power transmission route successively passing through the transmission input shaft I, a gear I, the gear VIII, the transmission intermediate shaft II, the gear IX, the gear IV, and the engagement sleeve II, and is outputted via the transmission output shaft, and power outputted from the driving motor II is transmitted through a power transmission route successively passing through a transmission input shaft II, the gear II, a gear VI, a transmission intermediate shaft I, a gear VII, the gear III, and the engagement sleeve I, and is outputted via the transmission output shaft,
step 3: shifting the driving system from the dual-motor intermediate-speed gear position to a gear position at which the driving motor II operates alone at a low speed, comprising: disengaging the engagement sleeve II from the gear IV, wherein power outputted from the driving motor II is transmitted through a power transmission route successively passing through the transmission input shaft II, the gear II, the gear VI, the transmission intermediate shaft I, the gear VII, the gear III, and the engagement sleeve I, and is outputted via the transmission output shaft, and
step 4: shifting the driving system from the gear position at which the driving motor II operates alone at a low speed to a gear position at which the driving motor I and the driving motor II operate at low speeds, comprising: adjusting a rotating speed of the driving motor I, and engaging the engagement sleeve II with a gear V such that the gear V is fixedly connected to the transmission output shaft when the rotating speed of the driving motor I is the same as the rotating speed of the transmission output shaft, wherein the driving motor I and the driving motor II rotate in the same direction and at different rotating speeds, power outputted from the driving motor I is transmitted through a power transmission route successively passing through the transmission input shaft I, the gear I, the gear VIII, the transmission intermediate shaft II, a gear X, the gear V, and the engagement sleeve II, and is outputted via the transmission output shaft, and power outputted from the driving motor II is transmitted through a power transmission route successively passing through the transmission input shaft II, the gear II, the gear VI, the transmission intermediate shaft I, the gear VII, the gear III, and the engagement sleeve I, and is outputted via the transmission output shaft.

8. The shift control method for a driving system for a dual-input shaft gearbox used with two motors according to claim 2, further comprising a reverse gear control method which comprises:
in a case that the driving system operates at a reverse gear position, the driving motor I operates alone and rotates reversely,
engaging an engagement sleeve II with a gear V, such that the gear V is fixedly connected to a transmission output shaft, wherein
power outputted from the driving motor I is transmitted through a power transmission route successively passing through a transmission input shaft I, a gear I, a gear VIII, a transmission intermediate shaft II, a gear X, the gear V, and the engagement sleeve II, and is outputted via the transmission output shaft.

9. The shift control method for a driving system for a dual-input shaft gearbox used with two motors according to claim 2, wherein when the driving system for a dual-input shaft gearbox used with two motors performs braking, the shift control method comprises:
in a case that a vehicle travels at the dual-motor low-speed gear position,
performing braking when a brake pedal is depressed, wherein a part of power inputted due to depression of the brake pedal is transmitted through a power transmission route successively passing through a transmission output shaft, an engagement sleeve II, a gear V, a gear X, a transmission intermediate shaft II, a gear VIII, a gear I, and a transmission input shaft I, and is inputted to the driving motor I to drive the driving motor I to generate power, and another part of the power inputted due to depression of the brake pedal is transmitted through a power transmission route successively passing through the transmission output shaft, an engagement sleeve I, a gear III, a gear VII, a transmission intermediate shaft I, a gear VI, a gear II, and a transmission input shaft II and is inputted into the driving motor II to drive the driving motor II to generate power, and
performing mechanical braking when a battery is fully charged,
in a case that the vehicle travels at the dual-motor intermediate gear position,
perform braking when the brake pedal is depressed, wherein a part of power inputted due to depression of the brake pedal is transmitted through a power transmission route successively passing through the transmission output shaft, the engagement sleeve I, the gear III, the gear VII, the transmission intermediate shaft I, the gear VI, the gear II, and the transmission input shaft II, and is inputted into the driving motor II to drive the driving motor II to generate power, and another part of power inputted due to depression of the brake pedal is transmitted through a power transmission route successively passing through the transmission output shaft, the engagement sleeve II, a gear IV, a gear IX, the transmission intermediate shaft II, the gear VIII, the gear I, and the transmission input shaft I, and is inputted into the driving motor I to drive the driving motor I to generate power, and
performing mechanical braking when the battery is fully charged, and
in a case that the vehicle travels at the dual-motor high-speed gear position,
perform braking when the brake pedal is depressed, wherein a part of the power inputted due to depression of the brake pedal is transmitted through a power transmission route successively passing through the transmission output shaft, the engagement sleeve II, the gear IV, the gear IX, the transmission intermediate shaft II, the gear VIII, the gear I, and the transmission input shaft I, and is inputted into the driving motor I to drive the driving motor I to generate power, and another part of the power inputted due to depression of the brake pedal is transmitted through a power transmission route successively passing through the transmission output shaft, the engagement sleeve I, the gear II, and the transmission input shaft II, and is inputted into the driving motor II to drive the driving motor II to generate power, and
performing mechanical braking when the battery is fully charged.
